(19) Europäisches Patentamt
European Patent Office
Office européen des brevets

(11) **EP 3 974 245 A1**

(12) **EUROPÄISCHE PATENTANMELDUNG**

(43) Veröffentlichungstag:
**30.03.2022   Patentblatt 2022/13**

(21) Anmeldenummer: **21197455.5**

(22) Anmeldetag: **17.09.2021**

(51) Internationale Patentklassifikation (IPC):
**B60L 58/12** (2019.01)       **B60L 58/21** (2019.01)
**B60L 58/22** (2019.01)       **H02J 7/00** (2006.01)

(52) Gemeinsame Patentklassifikation (CPC):
**B60L 58/21; B60L 58/12; B60L 58/22;**
**H02J 7/0014;** B60L 2200/26; B60L 2210/10;
B60L 2240/549

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **28.09.2020   DE 102020212197**

(71) Anmelder: **Siemens Mobility GmbH**
**81739 München (DE)**

(72) Erfinder: **Hassler, Stefan**
**91281 Kirchenthumbach, OT Neuzirkendorf (DE)**

(54) **VERFAHREN ZUM STEUERN EINES LADENS UND ENTLADENS VON SPEICHERZWEIGEN IN EINEM SCHIENENFAHRZEUG**

(57)     Bei einem erfindungsgemäßen Verfahren zum Steuern eines Ladens und Entladens von Speicherzweigen in einem Schienenfahrzeug, wobei das Schienenfahrzeug einen Gleichspannungszwischenkreis aufweist, welcher mit zumindest einem Antriebsmotor und mit zumindest zwei Speicherzweigen verbunden ist, wobei die Speicherzweige über eine jeweilige Lade-Entlade-Einrichtung geladen und entladen werden, und wobei die Speicherzweige beim Entladen elektrische Energie in den Gleichspannungszwischenkreis einspeisen und beim Laden elektrische Energie aus dem Gleichspannungszwischenkreis entnehmen, werden die Lade-Entlade-Einrichtungen von einer zentralen Steuereinrichtung des Schienenfahrzeugs derart angesteuert, dass die Speicherzweige gleichzeitig geladen oder entladen werden, wobei eine beim Laden in die Speicherzweige eingespeiste Gesamtladeleistung und eine beim Entladen aus den Speicherzweigen entnommene Gesamtentladeleistung auf die Speicherzweige in Abhängigkeit von deren jeweiligem Ladezustand aufgeteilt wird.

FIG 2

**Beschreibung**

Die Erfindung betrifft ein Verfahren zum Steuern eines Ladens und Entladens von mit einem Gleichspannungszwischenkreis verbundenen Speicherzweigen in einem Schienenfahrzeug sowie ein Schienenfahrzeug.

Aufgabe der Erfindung ist es, ein Verfahren und ein Schienenfahrzeug mit mehreren unabhängig voneinander betriebenen Speicherzweigen vorteilhaft weiterzuentwickeln.

Diese Aufgabe wird durch ein Verfahren sowie ein Schienenfahrzeug mit den jeweiligen Merkmalen gemäß den unabhängigen Patentansprüchen gelöst. Vorteilhafte Ausgestaltungen sind in jeweiligen abhängigen Patentansprüchen angegeben.

Bei einem erfindungsgemäßen Verfahren zum Steuern eines Ladens und Entladens von Speicherzweigen in einem Schienenfahrzeug, wobei das Schienenfahrzeug einen Gleichspannungszwischenkreis aufweist, welcher mit zumindest einem Antriebsmotor und mit zumindest zwei Speicherzweigen verbunden ist, wobei die Speicherzweige über eine jeweilige Lade-Entlade-Einrichtung geladen und entladen werden, und wobei die Speicherzweige beim Entladen elektrische Energie in den Gleichspannungszwischenkreis einspeisen und beim Laden elektrische Energie aus dem Gleichspannungszwischenkreis entnehmen, werden die Lade-Entlade-Einrichtungen von einer zentralen Steuereinrichtung des Schienenfahrzeugs derart angesteuert, dass die Speicherzweige gleichzeitig geladen oder entladen werden, wobei eine beim Laden in die Speicherzweige eingespeiste Gesamtladeleistung und eine beim Entladen aus den Speicherzweigen entnommene Gesamtentladeleistung auf die Speicherzweige in Abhängigkeit von deren jeweiligem Ladezustand aufgeteilt wird.

Dabei wird die Gesamtentladeleistung sowie die Gesamtladeleitung abhängig von den Ladezuständen derart aufgeteilt, dass Speicherzweige mit einem höheren Ladezustand mehr entladen und weniger geladen werden als Speicherzweige mit einem niedrigeren Ladezustand.

Ein wesentlicher Vorteil des erfindungsgemäßen Verfahrens sowie des Schienenfahrzeugs ist darin zu sehen, dass aufgrund einer Mehrzahl Speicherzweige hohe Energiemengen gespeichert werden können. Dabei wird durch die erfindungsgemäß vorgesehene Aufteilung der Gesamtentladeleistung bzw. der Gesamtladeleistung auf die einzelnen Speicherzweige in Abhängigkeit von deren Ladezuständen stets sichergestellt, dass alle Speicherzweige zumindest näherungsweise denselben Ladezustand aufweisen und somit jeweils stets in einem optimalen Betriebsbereich gehalten werden, wodurch die Speicherzweige in vorteilhafter Weise sehr lange Lebensdauern erreichen können.

Nach einer Ausgestaltung des erfindungsgemäßen Verfahrens wird von der zentralen Steuereinrichtung beim Entladen die Gesamtentladeleistung auf die N Speicherzweige aufgeteilt gemäß

$$Pi = \left(\frac{Ei}{Es}\right) \cdot Pse$$

wobei Pi eine auf den i-ten Speicherzweig (i = 1 bis N) entfallene Speicherleistung, Ei einen Ladezustand des i-ten Speicherzweigs, Es eine Summe der Ladezustände aller Speicherzweige (SZ1-SZn) und Pse die Gesamtentladeleistung bezeichnet.

Nach einer ergänzenden oder alternativen weiteren Ausgestaltung des erfindungsgemäßen Verfahrens wird von der zentralen Steuereinrichtung beim Laden die Gesamtladeleistung auf die N Speicherzweige aufteilt gemäß

$$Pi = \left(1 - \frac{Ei}{Es}\right) \cdot \frac{1}{\sum_{i=1}^{n}(1 - \frac{Ei}{Es})} \cdot Psl$$

wobei Pi eine auf dem i-ten Speicherzweig (i = 1 bis N) entfallene Speicherleistung, Ei einen Ladezustand des i-ten Speicherzweigs (SZ1-SZn), Es eine Summe der Ladezustände und Psl die Gesamtladeleistung bezeichnet.

Gemäß einer auf einer der beiden vorstehenden Ausgestaltungen basierenden weiteren Ausgestaltung des erfindungsgemäßen Verfahrens wird von der zentralen Steuereinrichtung der jeweilige Ladezustand der Speicherzweige in Form eines Energiewertes quantifiziert, der die im jeweiligen Speicherzweig gespeicherte Energie quantitativ angibt, und wird die Summe der Ladezustände der Speicherzweige durch eine Summenbildung der Energiewerte der Speicherzweige ermittelt.

Der jeweilige Ladezustand entspricht dabei insbesondere einem Energiestatus (Englisch: SoE, State-of-Energy), welcher einen prozentualen Anteil der verbleibenden Energie an der maximal speicherbaren Energie in dem Speicherzweigs bzw. dessen Speicherkapazität definiert.

Eine nominale Ladekapazität der Speicherzweige ist vorzugsweise identisch. Die Speicherzweige sind vorzugsweise baugleich. Falls sich die nominalen Ladekapazitäten der Speicherzweige unterscheiden, können die Ladezustände der Speicherzweige auf die jeweilige nominale Ladekapazität normiert und anschließend in normierter Form weiterverarbeitet werden.

Gemäß einer auf einer der drei vorstehenden Ausgestaltungen basierenden weiteren Ausgestaltung des erfindungsgemäßen Verfahrens wird von der zentralen Steuereinrichtung unter Heranziehung der individuellen Speicherleistungen für jeden Speicherzweig ein jeweiliger Speicherstrom ermittelt.

Gemäß einer auf der vorstehenden Ausgestaltung basierenden weiteren Ausgestaltung des erfindungsgemäßen Verfahrens wird von der zentralen Steuereinrichtung der jeweilige Speicherstrom ermittelt gemäß

$$Ii = \frac{-Ui + \sqrt{U_i^2 + 4 \cdot Ri \cdot Pi}}{2 \cdot Ri}$$

wobei Ii einen durch den i-ten Speicherzweig fließenden Speicherstrom, Ri einen Innenwiderstand des i-ten Speicherzweigs und Ui eine Speicherspannung an dem i-ten Speicherzweig bezeichnet.

Gemäß einer auf der vorstehenden Ausgestaltung basierenden weiteren Ausgestaltung des erfindungsgemäßen Verfahrens wird von der zentralen Steuereinrichtung für einen Speicherzweig, welcher ergänzend mit einer Zusatzkomponente des Schienenfahrzeugs verbunden ist, ein Gesamtstrom der Lade-Entlade-Einrichtung dieses Speicherzweigs ermittelt durch eine vorzeichenrichtige Addition eines Zusatzstromes, welcher durch die Zusatzkomponente fließt, zu dem für diesen Speicherzweig ermittelten Speicherstrom.

In dem erfindungsgemäßen Schienenfahrzeug sind die Lade-Entlade-Einrichtungen vorzugsweise als ein jeweiliger Gleichspannungswandler, auch als DC-DC-Wandler bezeichnet, ausgestaltet oder weisen einen solchen zumindest auf.

Eine Zusatzkomponente des Schienenfahrzeugs ist beispielsweise ein Hilfsbetriebeumrichter (Englisch: APS, Auxiliary Power Supply), welcher beispielsweise einer Speisung eines internen Bordnetzes zur Versorgung von Hilfsbetrieben des Schienenfahrzeugs dient.

Das erfindungsgemäße Schienenfahrzeug ist beispielsweise als ein Triebzug für insbesondere den Nah-, Regionalverkehr mit auf mehrere Fahrzeugteile verteilt angeordneten Energiespeichern, insbesondere Traktionsbatterien, ausgestaltet, wobei die Energiespeicher bzw. Traktionsbatterien einen jeweiligen Speicherzweig darstellen.

Das Schienenfahrzeug weist vorzugsweise ferner einen Umrichter auf, welcher mit einem externen Energieversorgungsnetz verbindbar ist und welcher den Gleichspannungszwischenkreis mit elektrischer Energie speist.

Die Erfindung wird nachfolgend anhand von Ausführungsbeispielen näher erläutert; dabei zeigen beispielhaft

Fig. 1	ein Ausführungsbeispiel für ein erfindungsgemäßes Schienenfahrzeug mit Speicherzweigen und einem Gleichspannungszwischenkreis, an den unter anderem ein Hilfsbetriebeumrichter für ein internes Bordnetz angeschlossen ist,

Fig. 2	ein Ausführungsbeispiel für ein erfindungsgemäßes Schienenfahrzeug mit Speicherzweigen und einem Gleichspannungszwischenkreis, wobei ein Hilfsbetriebeumrichter für ein internes Bordnetz an einen der Speicherzweige angeschlossen ist, und

Fig. 3	ein Ausführungsbeispiel für ein erfindungsgemäßes Schienenfahrzeug mit Speicherzweigen und einem Gleichspannungszwischenkreis, wobei ein Hilfsbetriebeumrichter für ein internes Bordnetz an einen der Speicherzweige sowie ein weiterer Hilfsbetriebeumrichter für ein weiteres internes Bordnetz an den Gleichspannungszwischenkreis angeschlossen ist.

In den Figuren werden für identische oder vergleichbare Komponenten stets dieselben Bezugszeichen verwendet.

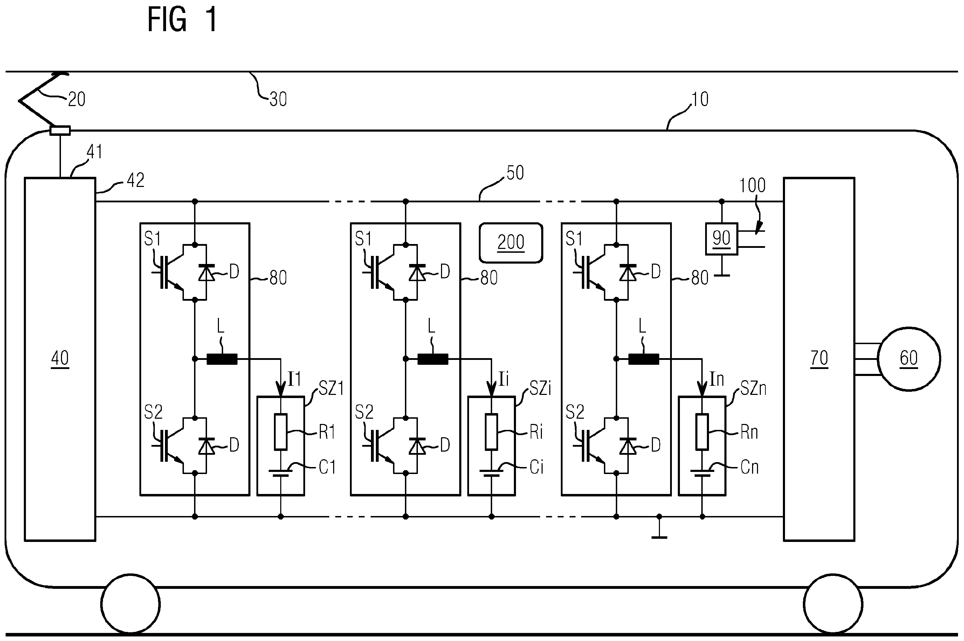

Die Figur 1 zeigt ein Ausführungsbeispiel für ein Schienenfahrzeug 10, dass über einen Stromabnehmer 20 mit einem externen Energieversorgungsnetz 30 elektrisch verbunden werden kann, um beispielsweise das Schienenfahrzeug 10 mit der Energie des externen Energieversorgungsnetzes 30 zu betreiben.

An den Stromabnehmer 20 ist eine erste Anschlussseite 41 eines Umrichters 40 angeschlossen, bei dem es sich beispielsweise um einen Vierquadrantensteller handeln kann. Eine zweite Anschlussseite 42 des Umrichters 40 steht mit einem Gleichspannungszwischenkreis 50 in Verbindung, der unter anderem zum Betrieb eines Antriebsmotors 60 des Schienenfahrzeugs 10 dient. Bei dem Ausführungsbeispiel gemäß Figur 1 steht der Antriebsmotor 60 über einen weiteren, in der Figur 1 rechten Umrichter 70 mit dem Gleichspannungszwischenkreis 50 in Verbindung.

Beispielsweise für den Fall, dass das Schienenfahrzeug 10 gemäß Figur 1 in einem Streckenabschnitt betrieben werden soll, bei dem kein externes Energieversorgungsnetz 30 zur Verfügung steht, weist das Schienenfahrzeug 10 zwei oder mehr Speicherzweige auf, beispielsweise N Speicherzweige, die mit den Bezugszeichen SZ1,... SZi,... SZn gekennzeichnet sind. Der Anschluss der N Speicherzweige SZ1 bis SZn erfolgt jeweils über eine dem jeweiligen Speicherzweig zugeordnete eigene Lade-Entlade-Einrichtung 80.

Die Lade-Entlade-Einrichtungen 80 können baugleich sein, wie in der Figur 1 dargestellt ist. Beispielsweise können die Lade-Entlade-Einrichtungen 80 durch Gleichspannungswandler gebildet sein, die zwei Schalter S1 und S2 mit antiparallel geschalteten Dioden D und eine Induktivität L umfassen.

An den Gleichspannungszwischenkreis 50 können darüber hinaus weitere Komponenten, insbesondere Energieverbraucher, angeschlossen sein. Bei dem Ausführungsbeispiel gemäß Figur 1 ist an den Gleichspannungszwischenkreis 50 beispielsweise ein Hilfsbetriebeumrichter 90 angeschlossen, der ein fahrzeuginternes Bordnetz 100 speist.

Zur Steuerung der Lade-Entlade-Einrichtungen 80 ist eine zentrale Steuereinrichtung 200 vorgesehen, die mit aus Gründen der Übersicht nicht weiter dargestellten Steuerleitungen mit den Schaltern S1 und S2 der Lade-Entlade-Einrichtungen 80 in Verbindung steht. Die Aufgabe der Lade-Entlade-Einrichtungen 80 besteht darin, die Speicherzweige SZ1 bis SZn jeweils gleichzeitig zu laden oder gleichzeitig zu entladen. Dabei stellt die zentrale Steuereinrichtung 200 stets sicher, dass die aus den Speicherzweigen SZ1 bis SZn entnommene Gesamtentladeleistung sowie die beim Laden eingespeiste Gesamtladeleistung auf die einzelnen Speicherzweige SZ1 bis SZn in Abhängigkeit von deren individuellen Ladezuständen aufgeteilt wird, nämlich derart, dass vollere Speicherzweige mehr entladen und weniger geladen werden als vergleichsweise leerere Speicherzweige.

Bei dem Ausführungsbeispiel gemäß Figur 1 wird die zentrale Steuereinrichtung 200 die Gesamtentladeleistung vorzugsweise aufteilen gemäß

$$Pi = \left(\frac{Ei}{Es}\right) \cdot Pse$$

wobei Pi (i=1 bis N) die auf den i-ten Speicherzweig SZi entfallene individuelle Speicherleistung, Ei den Ladezustand des i-ten Speicherzweigs, Es die Summe der Ladezustände aller Speicherzweige und Pse die Gesamtentladeleistung bezeichnet.

Beim Laden wird die zentrale Steuereinrichtung 200 die Gesamtladeleistung vorzugsweise aufteilen gemäß

$$Pi = \left(1 - \frac{Ei}{Es}\right) \cdot \frac{1}{\sum_{i=1}^{n}\left(1 - \frac{Ei}{Es}\right)} \cdot Psl$$

wobei Psl die Gesamtladeleistung bezeichnet.

Die Ladezustände Ei der Speicherzweige werden vorzugsweise jeweils in Form eines Energiewertes quantifiziert, der die im jeweiligen Speicherzweig gespeicherte Energie quantitativ angibt. Die Energiewerte Ei können beispielsweise berechnet werden gemäß:

$$Ei = 1/2 \; Ci \; Ui^2$$

wobei Ci die Kapazität des i-ten Energiespeichers und Ui die an dieser anliegende elektrische Spannung (Speicherspannung) bezeichnet.

Die Summe der Ladezustände Es der Speicherzweige wird vorzugsweise durch Summenbildung der Energiewerte der Speicherzweige ermittelt:

$$Es = \sum_{i=1}^{n} Ei$$

Die zentrale Steuereinrichtung 200 kann unter Heranziehung der individuellen Speicherleistungen für jeden Speicherzweig SZ1 bis SZn jeweils den zugehörigen Speicherstrom ermitteln gemäß

$$Ii = \frac{-Ui + \sqrt{U_i^2 + 4 \cdot Ri \cdot Pi}}{2 \cdot Ri}$$

wobei Ii den durch den i-ten der N Speicherzweige fließenden Speicherstrom, Ri den Innenwiderstand des i-ten Speicherzweigs und Ui die Speicherspannung an dem i-ten Speicherzweig bezeichnet.

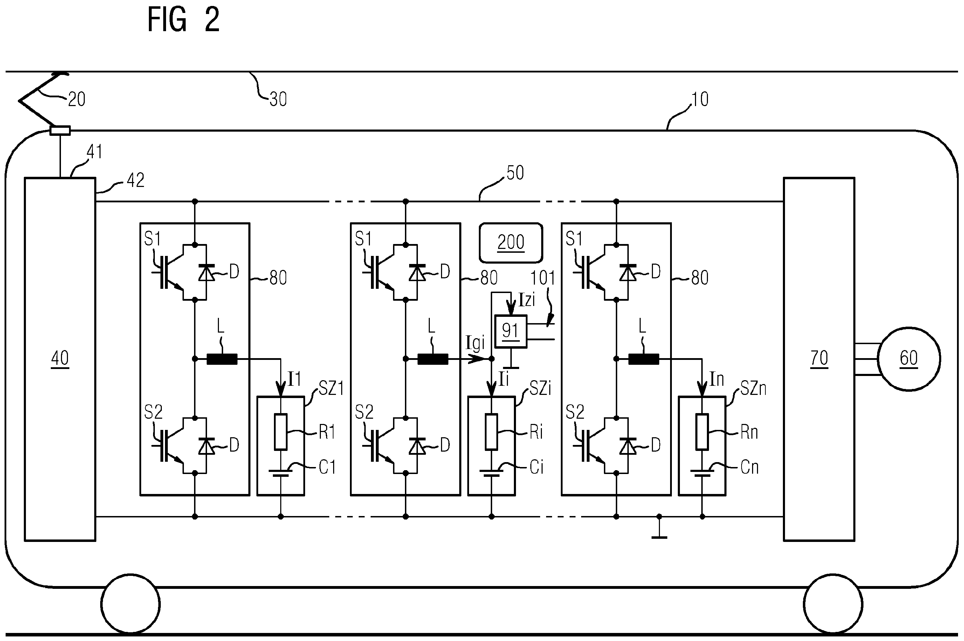

Die Figur 2 zeigt eine Ausführungsvariante des Ausführungsbeispiels gemäß Figur 1. Bei dem Ausführungsbeispiel gemäß Figur 2 sind an einen oder mehrere der Speicherzweige, beispielsweise an den Speicherzweig SZi, individuelle Zusatzkomponenten angeschlossen. Bei dem Ausführungsbeispiel gemäß Figur 2 besteht die individuelle Zusatzkomponente in einem Hilfsbetriebeumrichter 91, der ein fahrzeuginternes Bordnetz 101 speist. Der Hilfsbetriebeumrichter 91 und das fahrzeuginterne Bordnetz 101 gemäß Figur 2 können beispielsweise den Hilfsbetriebeumrichter 90 und das fahrzeuginterne Bordnetz 100 gemäß Figur 1 ersetzen.

Um den Umstand zu berücksichtigen, dass die Speicherzweige unterschiedlich belastet sind, wird die zentrale Steuereinrichtung 200 für jeden der Speicherzweige, an die eine individuelle Zusatzkomponente angeschlossen ist, hier also für den Speicherzweig SZi, den zugehörigen Gesamtstrom Igi, der von der zugeordneten Lade-Entlade-Einrichtung 80 eingestellt werden muss, ermitteln durch vorzeichenrichtige Addition des individuellen Zusatzstromes Izi, der durch die jeweilige Zusatzkomponente fließt, und den von der zentralen Steuereinrichtung 200 für den jeweiligen Speicherzweig SZi ermittelten Speicherstrom Ii:

$$Igi = Ii + Izi.$$

Im Übrigen gelten die obigen Ausführungen im Zusammenhang mit der Figur 1 entsprechend.

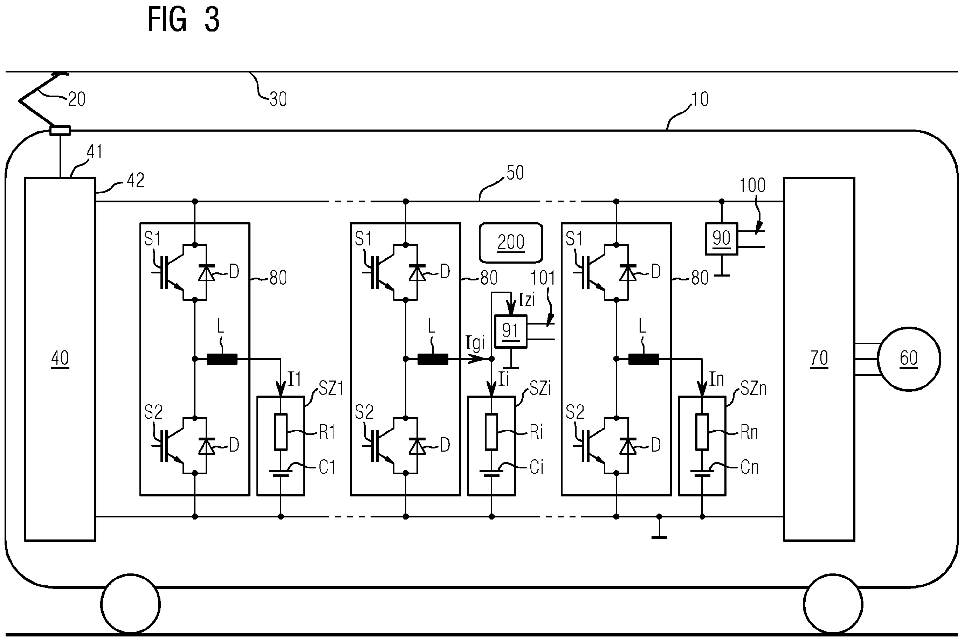

Die Figur 3 zeigt ein Ausführungsbeispiel, bei dem an den Gleichspannungszwischenkreis 50 ein Hilfsbetriebeumrichter 90 und ein fahrzeuginternes Bordnetz 100 angeschlossen sind, wie dies bei dem Ausführungsbeispiel gemäß Figur 1 der Fall ist. Darüber hinaus ist an einen oder mehrere der Speicherzweige, beispielsweise den Speicherzweig SZi, eine individuelle Zusatzkomponente, beispielsweise in Form eines weiteren Hilfsbetriebeumrichters 91 angeschlossen, der ein weiteres fahrzeuginternes Bordnetz 101 speist. Diesbezüglich gelten die obigen Ausführungen im Zusammenhang mit der Figur 2 entsprechend.

Bezugszeichenliste

| 10 | Schienenfahrzeug |
|---|---|
| 20 | Stromabnehmer |
| 30 | externes Energieversorgungsnetz |
| 40 | Umrichter |
| 41 | erste Anschlussseite |
| 42 | zweite Anschlussseite |
| 50 | Gleichspannungszwischenkreis |
| 60 | Antriebsmotor |
| 70 | Umrichter |
| 80 | Lade-Entladeeinrichtung |
| 90 | Hilfsbetriebeumrichter |
| 91 | Hilfsbetriebeumrichter |
| 100, 101 | fahrzeuginternes Bordnetz |
| 200 | zentrale Steuereinrichtung |

| D | Diode |
|---|---|
| Izi | Zusatzstrom |
| L | Induktivität |
| R1 bis Rn | Innenwiderstand |
| Ri | i-ter Innenwiderstand |
| S1, S2 | Schalter |
| SZ1 bis SZn | Speicherzweige |
| SZi | i-ter Speicherzweig |

**Patentansprüche**

1. Verfahren zum Steuern eines Ladens und Entladens von Speicherzweigen (SZ1-SZn) in einem Schienenfahrzeug (10), wobei

   - das Schienenfahrzeug (10) einen Gleichspannungszwischenkreis (50) aufweist, welcher mit zumindest einem Antriebsmotor (60) und mit zumindest zwei Speicherzweigen (SZ1-SZn) verbunden ist, wobei die Speicherzweige (SZ1-SZn) über eine jeweilige Lade-Entlade-Einrichtung (80) geladen und entladen werden, und wobei die Speicherzweige (SZ1-SZn) beim Entladen elektrische Energie in den Gleichspannungszwischenkreis (50) einspeisen und beim Laden elektrische Energie aus dem Gleichspannungszwischenkreis (50) entnehmen,
   - die Lade-Entlade-Einrichtungen (80) von einer zentralen Steuereinrichtung (200) des Schienenfahrzeugs (10) derart angesteuert werden, dass die Speicherzweige (SZ1-SZn) gleichzeitig geladen oder entladen werden, wobei eine beim Laden in die Speicherzweige (SZ1-SZn) eingespeiste Gesamtladeleistung und eine beim Entladen aus den Speicherzweigen (SZ1-SZn) entnommene Gesamtentladeleistung auf die Speicherzweige (SZ1-SZn) in Abhängigkeit von deren jeweiligem Ladezustand aufgeteilt wird.

2. Verfahren nach Anspruch 1, wobei von der zentralen Steuereinrichtung (200) beim Entladen die Gesamtentladeleistung auf die Speicherzweige (SZ1-SZn) aufgeteilt wird gemäß

$$ Pi = \left( \frac{Ei}{Es} \right) \cdot Pse $$

wobei Pi eine auf den i-ten Speicherzweig (SZ1-SZn) entfallene Speicherleistung, Ei einen Ladezustand des i-ten Speicherzweigs (SZ1-SZn), Es eine Summe der Ladezustände aller Speicherzweige (SZ1-SZn) und Pse die Gesamtentladeleistung bezeichnet.

3. Verfahren nach Anspruch 1 oder 2, wobei von der zentralen Steuereinrichtung (200) beim Laden die Gesamtladeleistung auf die Speicherzweige (SZ1-SZn) aufteilt gemäß

$$ Pi = \left( 1 - \frac{Ei}{Es} \right) \cdot \frac{1}{\sum_{i=1}^{n} (1 - \frac{Ei}{Es})} \cdot Psl $$

wobei Pi eine auf dem i-ten Speicherzweig (SZ1-SZn) entfallene Speicherleistung, Ei einen Ladezustand des i-ten Speicherzweigs (SZ1-SZn), Es eine Summe der Ladezustände und Psl die Gesamtladeleistung bezeichnet.

4. Verfahren nach Anspruch 2 oder 3, wobei von der zentralen Steuereinrichtung (200)

   - der jeweilige Ladezustand der Speicherzweige (SZ1-SZn) in Form eines Energiewertes quantifiziert wird, der die im jeweiligen Speicherzweig (SZ1-SZn) gespeicherte Energie quantitativ angibt, und
   - die Summe der Ladezustände der Speicherzweige (SZ1-SZn) durch eine Summenbildung der Energiewerte der Speicherzweige (SZ1-SZn) ermittelt wird.

5. Verfahren nach einem der Ansprüche 2 bis 4, wobei von der zentralen Steuereinrichtung (200) unter Heranziehung der individuellen Speicherleistungen für jeden Speicherzweig (SZ1-SZn) ein jeweiliger Speicherstrom ermittelt wird.

6. Verfahren nach Anspruch 5, wobei

von der zentralen Steuereinrichtung (200) der jeweilige Speicherstrom ermittelt wird gemäß

$$Ii = \frac{-Ui + \sqrt{U_i^2 + 4 \cdot Ri \cdot Pi}}{2 \cdot Ri}$$

wobei Ii einen durch den i-ten Speicherzweig (SZ1-SZn) fließenden Speicherstrom, Ri einen Innenwiderstand des i-ten Speicherzweigs (SZ1-SZn) und Ui eine Speicherspannung an dem i-ten Speicherzweig (SZ1-SZn) bezeichnet.

7. Verfahren nach Anspruch 6, wobei
von der zentralen Steuereinrichtung (200) für einen Speicherzweig (SZi), welcher ergänzend mit einer Zusatzkomponente (91) des Schienenfahrzeugs (10) verbunden ist, ein Gesamtstrom (Igi) der Lade-Entlade-Einrichtung (80) dieses Speicherzweigs (SZi) ermittelt wird durch eine vorzeichenrichtige Addition eines Zusatzstromes (Izi), welcher durch die Zusatzkomponente (91) fließt, zu dem für diesen Speicherzweig (SZi) ermittelten Speicherstrom (Ii).

8. Schienenfahrzeug (10), mit

   - einem Gleichspannungszwischenkreis (50) und zumindest einem mit dem Gleichspannungszwischenkreis (50) verbundenen Antriebsmotor (60),
   - zumindest zwei mit dem Gleichspannungszwischenkreis (50) verbundenen Speicherzweigen (SZ1-SZn), wobei die Speicherzweige (SZ1-SZn) über eine jeweilige Lade-Entlade-Einrichtung (80) geladen und entladen werden, und wobei die Speicherzweige (SZ1-SZn) beim Entladen elektrische Energie in den Gleichspannungszwischenkreis (50) einspeisen und beim Laden elektrische Energie aus dem Gleichspannungszwischenkreis (50) entnehmen, und
   - eine zentrale Steuereinrichtung (200), welche ausgestaltet ist, die Speicherzweige (SZ1-SZn) gleichzeitig zu laden oder zu entladen, wobei eine beim Laden in die Speicherzweige (SZ1-SZn) eingespeiste Gesamtladeleistung und eine beim Entladen aus den Speicherzweigen (SZ1-SZn) entnommene Gesamtentladeleistung auf die Speicherzweige (SZ1-SZn) in Abhängigkeit von deren jeweiligem Ladezustand aufgeteilt wird.

9. Schienenfahrzeug (10) nach Anspruch 8, wobei die zentrale Steuereinrichtung (200) ausgestaltet ist, beim Entladen die Gesamtentladeleistung aufzuteilen gemäß

$$Pi = \left(\frac{Ei}{Es}\right) \cdot Pse$$

und/oder
beim Laden die Gesamtladeleistung aufzuteilen gemäß

$$Pi = \left(1 - \frac{Ei}{Es}\right) \cdot \frac{1}{\sum_{i=1}^{n}(1 - \frac{Ei}{Es})} \cdot Psl$$

wobei Pi eine auf die i-te der N Speicherzweige (SZ1-SZn) entfallene individuelle Speicherleistung, Ei einen Ladezustand des i-ten Speicherzweigs (SZ1-SZn), Es eine Summe der Ladezustände aller Speicherzweige (SZ1-SZn), Pse die Gesamtentladeleistung bezeichnet und Psl die Gesamtladeleistung bezeichnet.

10. Schienenfahrzeug (10) nach Anspruch 9, wobei die zentrale Steuereinrichtung (200) ausgestaltet ist,

   - den jeweiligen Ladezustand der Speicherzweige (SZ1-SZn) in Form eines Energiewertes zu quantifizieren, der die im jeweiligen Speicherzweig (SZ1-SZn) gespeicherte Energie quantitativ angibt, und
   - die Summe der Ladezustände der Speicherzweige (SZ1-SZn) durch eine Summenbildung der Energiewerte der Speicherzweige (SZ1-SZn) zu ermitteln.

11. Schienenfahrzeug (10) nach Anspruch 9 oder 10, wobei die zentrale Steuereinrichtung (200) ausgestaltet ist, unter Heranziehung der individuellen Speicherleistungen für jeden Speicherzweig (SZ1-SZn) einen jeweiligen Speicherstrom zu ermitteln, wobei der jeweilige Speicherstrom insbesondere ermittelt wird gemäß

$$Ii = \frac{-Ui + \sqrt{U_i^2 + 4 \cdot Ri \cdot Pi}}{2 \cdot Ri}$$

wobei Ii einen durch den i-ten Speicherzweig (SZ1-SZn) fließenden Speicherstrom, Ri einen Innenwiderstand des i-ten Speicherzweigs (SZ1-SZn) und Ui eine Speicherspannung an dem i-ten Speicherzweig (SZ1-SZn) bezeichnet.

12. Schienenfahrzeug (10) nach Anspruch 11,

   mit einer Zusatzkomponente (91), welche mit einem Speicherzweig (SZi) verbunden ist, wobei die zentrale Steuereinrichtung (200) ausgestaltet ist, für diesen Speicherzweig (SZi) einen Gesamtstrom (Igi) der Lade-Entlade-Einrichtung (80) zu ermitteln durch eine vorzeichenrichtige Addition eines Zusatzstromes (Izi), welcher durch die Zusatzkomponente (91) fließt, zu dem für diesen Speicherzweig (SZi) ermittelten Speicherstrom (Ii).

13. Schienenfahrzeug (10) nach einem der Ansprüche 8 bis 12, mit einem Umrichter (40), welcher mit einem externen Energieversorgungsnetz (30) verbindbar ist und den Gleichspannungszwischenkreis (50) mit elektrischer Energie speist.

14. Schienenfahrzeug (10) nach einem der Ansprüche 8 bis 13, wobei die Lade-Entlade-Einrichtungen (80) als ein jeweiliger Gleichspannungswandler ausgestaltet sind.

15. Schienenfahrzeug (10) nach einem der Ansprüche 8 bis 14, wobei die Zusatzkomponente (91) als ein Hilfsbetriebeumrichter ausgestaltet ist.

FIG 1

EP 3 974 245 A1

FIG 2

FIG 3

EP 3 974 245 A1

Europäisches
Patentamt

European
Patent Office

Office européen
des brevets

**EUROPÄISCHER RECHERCHENBERICHT**

Nummer der Anmeldung

**EP 21 19 7455**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/020212 A1 (ABB INC [CA]; INNISS BRIAN [CA]; MESSAS OMAR [CA]) 14. Februar 2013 (2013-02-14) * Absatz [0001] - Absatz [0004] * * Absatz [0012] - Absatz [0028]; Abbildung 1 * ----- | 1-3,8-10 | INV. B60L58/12 B60L58/21 B60L58/22 H02J7/00 |
| X | EP 3 530 512 A1 (ALSTOM TRANSP TECH [FR]) 28. August 2019 (2019-08-28) | 1,8,13, 14 | |
| Y | * das ganze Dokument * ----- | 2-7, 9-12,15 | |
| Y | EP 2 112 014 A1 (TOYOTA MOTOR CO LTD [JP]) 28. Oktober 2009 (2009-10-28) * Absatz [0001] - Absatz [0015] * * Absatz [0025] - Absatz [0043]; Abbildung 1 * * Absatz [0109] - Absatz [0112]; Abbildungen 10A, 10B * ----- | 2-7, 9-12,15 | |

RECHERCHIERTE SACHGEBIETE (IPC)

B60L
H02J

Der vorliegende Recherchenbericht wurde für alle Patentansprüche erstellt

| Recherchenort | Abschlußdatum der Recherche | Prüfer |
|---|---|---|
| **Den Haag** | **11. Februar 2022** | **Utz, Tilman** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 19 7455

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2022

| Im Recherchenbericht angeführtes Patentdokument | Datum der Veröffentlichung | Mitglied(er) der Patentfamilie | Datum der Veröffentlichung |
|---|---|---|---|
| WO 2013020212 A1 | 14-02-2013 | CN 103998285 A | 20-08-2014 |
| | | EP 2739502 A1 | 11-06-2014 |
| | | US 2014239856 A1 | 28-08-2014 |
| | | WO 2013020212 A1 | 14-02-2013 |
| EP 3530512 A1 | 28-08-2019 | EP 3530512 A1 | 28-08-2019 |
| | | FR 3078175 A1 | 23-08-2019 |
| EP 2112014 A1 | 28-10-2009 | CN 101610930 A | 23-12-2009 |
| | | EP 2112014 A1 | 28-10-2009 |
| | | EP 2671750 A1 | 11-12-2013 |
| | | JP 4179383 B2 | 12-11-2008 |
| | | JP 2008199781 A | 28-08-2008 |
| | | US 2010065351 A1 | 18-03-2010 |
| | | WO 2008099953 A1 | 21-08-2008 |

EPO FORM P0461

Für nähere Einzelheiten zu diesem Anhang : siehe Amtsblatt des Europäischen Patentamts, Nr.12/82